# EUROPÄISCHE PATENTANMELDUNG

(11) **EP 4 216 384 A1**
(43) Veröffentlichungstag der Anmeldung: **26.07.2023**
(21) Anmeldenummer: 23150403.6
(22) Anmeldetag: 05.01.2023
(51) Int. Cl.: H02G 3/12, H02G 3/14

(54) **FUNKTIONSELEMENT FÜR EIN GERÄT DER HAUSINSTALLATIONSTECHNIK**

(30) Priorität: 21.01.2022 DE 102022101421
(71) Anmelder: ABB Schweiz AG, 5400 Baden (CH)
(72) Erfinder: Diehl, Sven, 57078 Siegen (DE); Kloy, Olaf, 42389 Wuppertal (DE); Ewers, Manfred, 58239 Schwerte (DE)
(74) Vertreter: Wesch, Arno

(57) **Zusammenfassung**

Ein Funktionselement (9) zur verrastenden Anordnung an einem Gerät der Hausinstallationstechnik, umfassend einen Grundkörper (9a) mit mindestens einer Klemmfeder (10a), wobei die Klemmfeder (10a) mit mindestens einem freien Ende vom Grundkörper (9a) abragt, um in ein Mittel (4a) zur verrastenden Aufnahme am Gerät einzugreifen, ist im Hinblick auf die Aufgabe, eine Befestigungsmöglichkeit für Klemmfedern in Funktionselementen anzugeben, die möglichst universell einsetzbar ist und durch welche die Bereitstellung aufwändig gefertigter Spritzgießwerkzeuge für Einlegeteile möglichst vermieden werden kann, dadurch gekennzeichnet, dass die Klemmfeder (10a) Teil einer Federbaugruppe (10) ist, welche als separat gefertigte Einheit mit dem Grundkörper (9a) verbunden ist, wobei die Federbaugruppe (10) die Klemmfeder (10a) und ein mit dieser verbundenes Kunststoffteil (10b) umfasst. Des Weiteren ist eine Federbaugruppe (10) als separat gefertigte Einheit isoliert offenbart.

## Beschreibung

Die Erfindung betrifft ein Funktionselement für ein Gerät der Hausinstallationstechnik und eine Federbaugruppe zur Anordnung in einem solchen, wobei das Funktionselement einen Grundkörper mit mindestens einer Klemmfeder umfasst und wobei die Klemmfeder mit mindestens einem freien Ende vom Grundkörper abragt, um in ein Mittel zur verrastenden Aufnahme am Gerät der Hausinstallationstechnik einzugreifen.

Aus dem Stand der Technik sind bereits diverse Geräte der Hausinstallationstechnik, wie Schalter und Steckdosen, bekannt, an denen diverse Funktionselemente nicht geschraubt, sondern anderweitig befestigt werden. Vor diesem Hintergrund sind insbesondere Funktionselemente wie Blindabdeckungen für Schalter oder Steckdosen bereits bekannt.

Bei solchen Anwendungsfällen befindet sich in der Regel ein Unterputzeinsatz in einer Wand. Der Unterputzeinsatz weist in der Regel eine Basisplatte aus Metall auf, manchmal auch eine Basisplatte aus Kunststoff. In der Basisplatte sind Öffnungen oder Gewinde zur Befestigung einer Abdeckung, wie beispielsweise einer Zentralscheibe, insbesondere einer Blind-Zentralscheibe, vorgesehen. Wenn eine solche Abdeckung an dem Unterputzeinsatz befestigt wird, dann klemmt diese häufig auch einen Abdeckrahmen zwischen sich und der Wand ein.

Sehr häufig wird die Zentralscheibe mit einer Klemmfeder in dem Unterputzeinsatz befestigt, indem die Klemmfeder in Öffnungen einer Basisplatte oder Befestigungsplatte des Unterputzeinsatzes eingreift.

Es ist bereits bekannt, die Klemmfeder in der Zentralscheibe zu befestigen, indem Sie als Einlegeteil bei einem Spritzgießprozess direkt umspritzt wird. Werkzeuge zum Spritzen einer Zentralscheibe und/ oder zum Umspritzen der Klemmfeder sind allerdings sehr aufwendig gefertigt und komplex aufgebaut.

In anderen bereits bekannten Fällen wird eine Klemmfeder auf speziell geformte Dome an einer Zentralscheibe aufgedrückt und durch eine Verzahnung innerhalb der Klemmfeder geklemmt. Bei einer solchen Lösung hat die Klemmfeder in der Regel einen großen freiliegenden Bereich so dass die Klemmfeder für unbeabsichtigte Verformungen anfällig ist.

Der Erfindung liegt daher die Aufgabe zugrunde, eine Befestigungsmöglichkeit für Klemmfedern in Funktionselementen anzugeben, die möglichst universell einsetzbar ist und durch welche die Bereitstellung aufwändig gefertigter Spritzgießwerkzeuge für Einlegeteile möglichst vermieden werden kann.

Erfindungsgemäß wird die voranstehende Aufgabe durch ein Funktionselement mit den Merkmalen des Anspruchs 1 oder durch eine Federbaugruppe mit den Merkmalen des Anspruchs 10 gelöst.

Nach Anspruch 1 ist das eingangs genannte Funktionselement dadurch gekennzeichnet, dass die Klemmfeder Teil einer Federbaugruppe ist, welche als separat gefertigte Einheit mit dem Grundkörper des Funktionselements verbunden ist, wobei die Federbaugruppe die Klemmfeder und ein mit dieser verbundenes Kunststoffteil umfasst. Nach Anspruch 10 umfasst die Federbaugruppe eine Klemmfeder und ein mit dieser verbundenes Kunststoffteil.

Erfindungsgemäß wird die Aufgabe dadurch gelöst, dass im Gegensatz zum Stand der Technik keine Umspritzung der Klemmfeder mit einer großen Menge an Kunststoff bei der Fertigung eines Funktionselements erfolgt, sondern nur noch eine im Wesentlichen minimierte Menge an Kunststoff verwendet wird.

Das Kunststoffteil der Federbaugruppe kann so filigran ausgelegt werden, dass es sich in eine Art Tasche eines Funktionselements einschieben und dort befestigen lässt. So kann die Federbaugruppe separat gefertigt werden und kann dann als vormontiertes Einzelteil in ein Funktionselement eingesetzt werden. Auf kostspielige Spritzgießwerkzeuge, mit denen Klemmfedern direkt mit Funktionselementen stoffschlüssig verbunden werden, kann verzichtet werden. Die Klemmfeder kann erst mit dem Kunststoffteil verbunden werden, und dann kann die fertige Federbaugruppe in das vorgefertigte Funktionselement stoffschlüssig, formschlüssig und/ oder kraftschlüssig eingesetzt werden.

Das Kunststoffteil kann in vielfältiger Weise mit der Klemmfeder verbunden werden. Das Kunststoffteil kann an die Klemmfeder angespritzt werden. Denkbar ist aber auch, erst das Kunststoffteil zu fertigen, dann die Klemmfeder mit diesem zu verbinden und dann die fertige Federbaugruppe in das Funktionselement einzusetzen. Wesentlich ist, dass zur Fertigung des Kunststoffteils nur eine sehr geringe Menge an Kunststoff verarbeitet werden muss, nämlich weniger Kunststoff als zur Fertigung des Funktionselements notwendig ist.

Die Federbaugruppe ist vorteilhaft in einer Ausnehmung, Mulde oder Tasche des Grundkörpers zumindest bereichsweise aufgenommen, so dass die Klemmfeder mit mindestens einem freien Ende vom Grundkörper abragt, wobei das Kunststoffteil in der Ausnehmung, Mulde oder Tasche zumindest bereichsweise aufgenommen ist. Die Größe des Kunststoffteils kann auf die Dimension der Ausnehmung, Mulde oder Tasche abgestimmt werden. Bevorzugt ist das Kunststoffteil vollständig in der Ausnehmung, Mulde oder Tasche aufgenommen, um einen besonders sicheren Sitz der Federbaugruppe zu gewährleisten.

Die Klemmfeder ist vorteilhaft aus einem Metall gefertigt und von dem Kunststoffteil teilweise, zumindest in dem Befestigungsbereich, umspritzt. Hierdurch ist die Klemmfeder stoffschlüssig und verliersicher mit dem Kunststoffteil verbunden. Die Klemmfeder weist eine hohe Stabilität bei großer reversibler Verformbarkeit auf.

Das Kunststoffteil weist vorteilhaft eine Aussparung auf, welche von Rastmitteln des Grundkörpers durchgriffen ist, um die Federbaugruppe formschlüssig am Grundkörper festzulegen. Durch Rastmittel kann die Federbaugruppe als Clipsteil in den Grundkörper eingeclipst werden. Die Federbaugruppe ist bevorzugt reversibel im Grundkörper aufgenommen und kann durch Deformieren der Rastmittel auch wieder entnommen werden. Denkbar ist auch, dass am Kunststoffteil Rastmittel ausgebildet sind, die mit Aussparungen im Grundkörper in Eingriff gelangen können.

Die Klemmfeder weist vorteilhaft zwei Flügel auf, die mit ihren freien Enden vom Grundkörper und/ oder vom Kunststoffteil abragen. Die beiden Flügel erlauben eine sichere, im Wesentlichen verkippungsfreie Aufnahme des Funktionselements in einem Gerät der Hausinstallationstechnik. Vorteilhaft sind in einem Funktionselement zwei Federbaugruppen, nämlich zwei Klemmfedern mit je zwei Flügeln, aufgenommen. Die Federbaugruppe kann von oben oder seitlich in die Tasche des Grundkörpers eingesteckt werden.

Vorteilhaft ist das Funktionselement als Zentralscheibe oder als Blindscheibe ausgebildet. Eine Zentralscheibe oder Blindscheibe kann mit einer oder mehreren Klemmfedern in einem Unterputzeinsatz befestigt werden, indem die Klemmfeder in Öffnungen an einer Befestigungsplatte des Unterputzeinsatzes eingreift.

Vor diesem Hintergrund umfasst ein Gerät der Hausinstallationstechnik vorteilhaft ein Funktionselement der hier beschriebenen Art und Mittel zur verrastenden Aufnahme der Klemmfeder, wobei die Klemmfeder in die Mittel verrastend eingreift und dadurch das Funktionselement am Gerät festlegt.

Vorteilhaft sind die Mittel zur verrastenden Aufnahme an einem Unterputzeinsatz angeordnet. So kann das Funktionselement einen Abdeckrahmen zwischen sich und einer Wand einklemmen.

Eine Federbaugruppe kann in einem Funktionselement und/ oder in einem Gerät der hier beschriebenen Art verwendet werden, wobei die Federbaugruppe eine Klemmfeder und ein mit dieser verbundenes Kunststoffteil umfasst. Bevorzugt ist das Kunststoffteil an die Klemmfeder angespritzt und mit dieser formschlüssig verbunden. Die Federbaugruppe ist als separate Einheit in ein Funktionselement oder ein Gerät einsetzbar. Die Verbindung der Federbaugruppe mit dem Funktionselement oder dem Gerät kann stoffschlüssig, formschlüssig und/ oder kraftschlüssig sein. Die Verbindung kann auch durch eine thermische Vernietung oder Verklebung erfolgen.

In der Zeichnung zeigen
- Fig. 1: einen schematisch dargestellten Querschnitt durch ein Gerät der Hausinstallationstechnik bzw. ein Installationsgerät,
- Fig. 2: eine Explosionsansicht eines Geräts der Hausinstallationstechnik, bei welchem ein Funktionselement mit umspritzter Klemmfeder verwendet wird,
- Fig. 3: eine Darstellung eines Unterputzeinsatzes mit Öffnungen in dessen Befestigungsplatte, wobei die Öffnungen zur Aufnahme der Flügel einer Klemmfeder vorgesehen sind,
- Fig. 4: eine Zentralscheibe mit zwei umspritzten Klemmfedern, deren Flügel vom Funktionselement abragen,
- Fig. 5: eine Klemmfeder als Einzelteil,
- Fig. 6: ein als Zentralscheibe ausgebildetes Funktionselement mit zwei aufgeklemmten Klemmfedern,
- Fig. 7: eine Explosionsansicht der Zentralscheibe gemäß Fig. 6 mit nicht aufgeklemmten Klemmfedern, welche auf speziell geformte Dome an der Zentralscheibe aufgedrückt werden können,
- Fig. 8: eine Unteransicht einer Zentralscheibe, in welcher eine Federbaugruppe mittels einer Rastbefestigung aufgenommen ist,
- Fig. 9: eine perspektivische Draufsicht auf die Zentralscheibe gemäß Fig. 8,
- Fig. 10: eine Ansicht ins Innere des Grundkörpers der Zentralscheibe nach Fig. 9 ohne Klemmfedern, wobei der Grundkörper aus Kunststoff gefertigt ist und eine angeformte Tasche zur Aufnahme einer Federbaugruppe aufweist,
- Fig. 11: eine Federbaugruppe zur Anordnung in der Tasche nach Fig. 10 und
- Fig. 12: eine Explosionsansicht der Federbaugruppe nach Fig. 11, in welcher die Klemmfeder und das Kunststoffteil separat dargestellt sind.

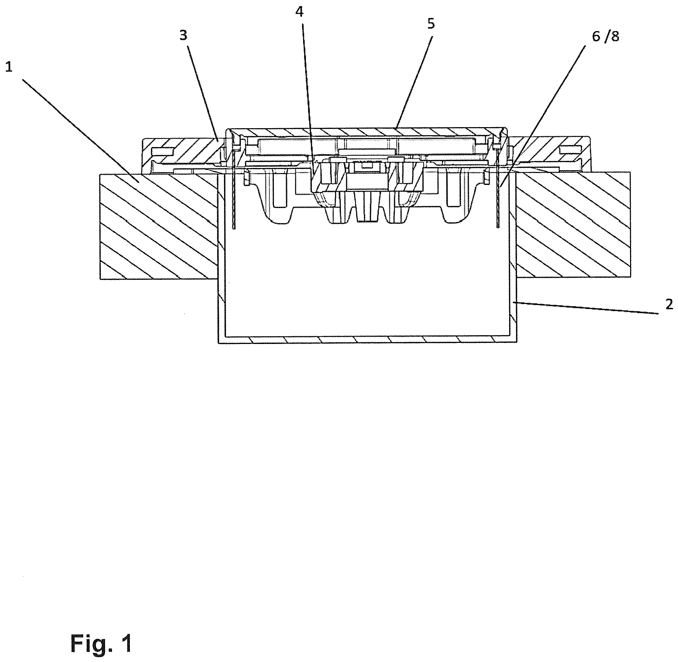

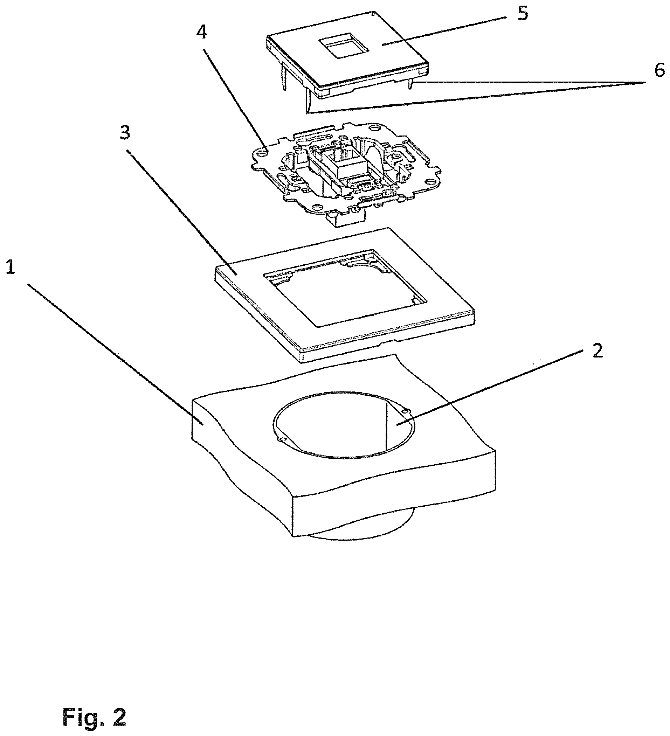

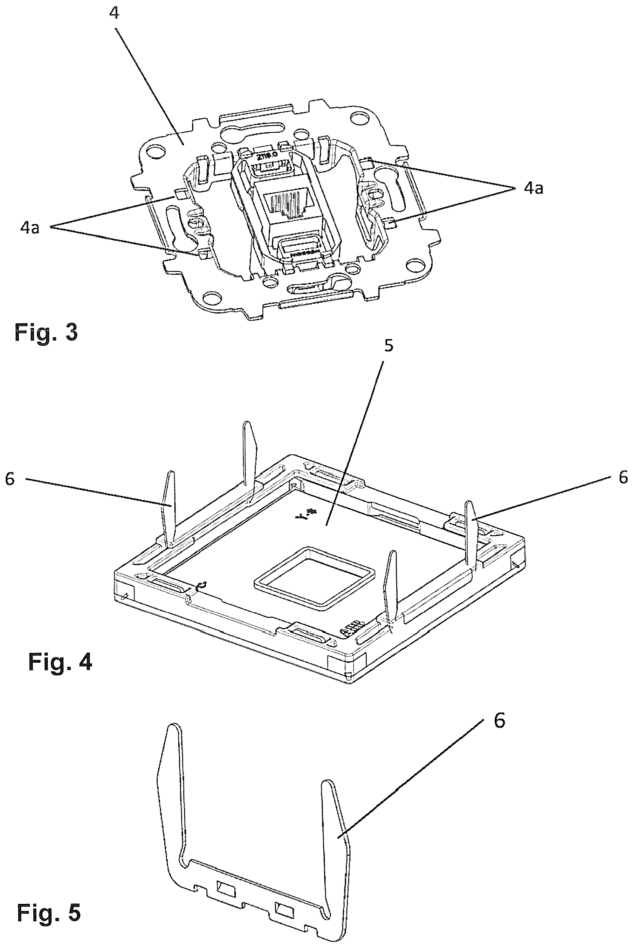

Die Fig. 1 bis 7 zeigen Ausgestaltungen des Stands der Technik. Fig. 1 zeigt einen schematisch dargestellten Querschnitt durch ein Gerät der Hausinstallationstechnik, welches in einer Wand 1 angeordnet ist. Das Gerät weist eine Gerätedose 2 und einen Rahmen 3 auf. Weiter weist das Gerät einen Unterputzeinsatz 4 mit einer Befestigungsplatte oder Trägerplatte auf. Das Gerät weist des Weiteren als Funktionselement 5 eine Zentralscheibe mit umspritzter Klemmfeder 6 auf. Fig. 2 zeigt eine Explosionsansicht des Geräts gemäß Fig. 1. Fig. 3 zeigt, dass in der Befestigungsplatte des Unterputzeinsatzes 4 Mittel 4a zur verrastenden Aufnahme, nämlich Öffnungen zum Eingriff der Klemmfedern 6, vorgesehen sind.

Insoweit zeigt Fig. 1 ein Gerät der Hausinstallationstechnik nach dem Stand der Technik, umfassend ein Funktionselement 5 und Mittel 4a zur verrastenden Aufnahme einer Klemmfeder 6, wobei die Klemmfeder 6 in die Mittel verrastend eingreift und dadurch das Funktionselement 5 am Gerät festlegt. Die Mittel 4a zur verrastenden Aufnahme sind an einem Unterputzeinsatz 4 angeordnet. Konkret sind zwei Klemmfedern 6 vorgesehen.

Fig. 4 zeigt das Funktionselement 5, nämlich die Zentralscheibe, von unten und Fig. 5 zeigt eine der Klemmfedern 6 als Einzelteil.

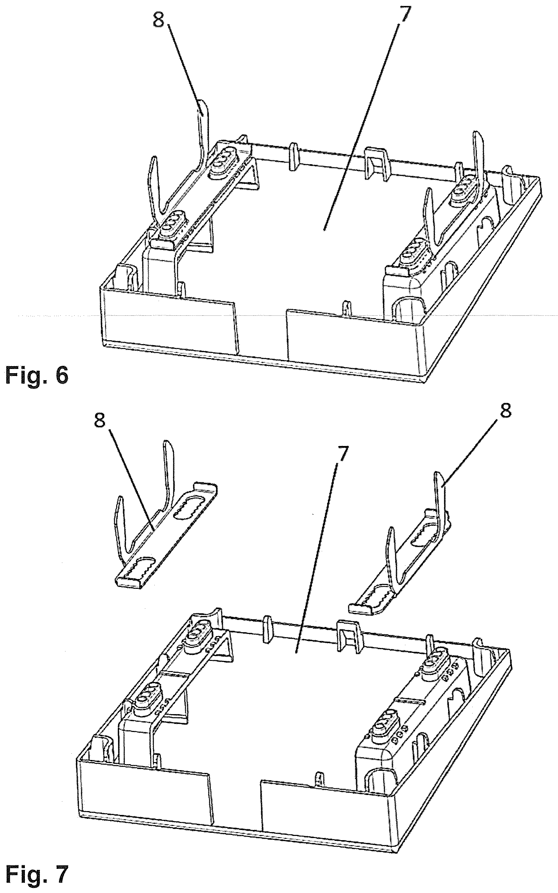

Fig. 6 zeigt ein weiteres Funktionselement 7 des Stands der Technik, welches als Zentralscheibe ausgestaltet ist, von unten. Das Funktionselement 7 weist zwei aufgedrückte Klemmfedern 8 auf. Fig. 7 zeigt eine Explosionsdarstellung der Klemmfedern und der Zentralscheibe.

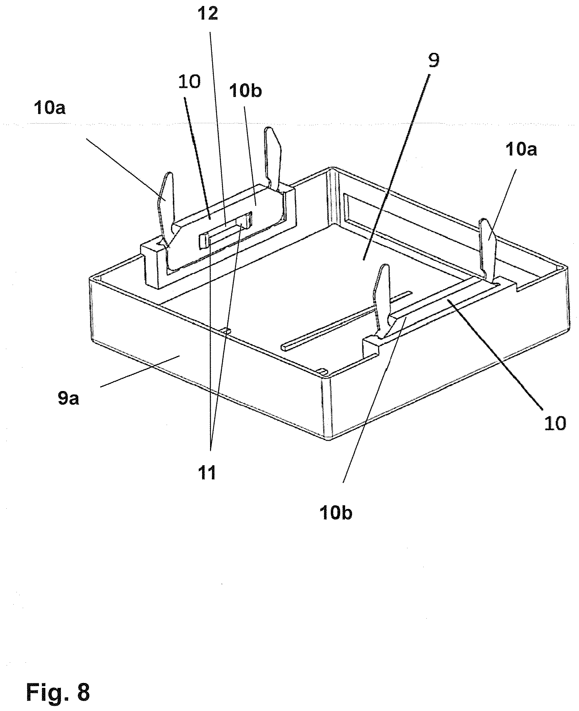

Fig. 8 zeigt ein Funktionselement 9 zur verrastenden Anordnung an einem Gerät der Hausinstallationstechnik gemäß Fig. 1, umfassend einen Grundkörper 9a mit min-destens einer Klemmfeder 10a, wobei die Klemmfeder 10a mit mindestens einem freien Ende vom Grundkörper 9a abragt, um in ein Mittel 4a zur verrastenden Aufnahme an einem Gerät der zuvor beschriebenen Art einzugreifen. Der Grundkörper 9a ist aus Kunststoff gefertigt.

Die Klemmfeder 10a ist Teil einer Federbaugruppe 10, welche als separat gefertigte Einheit mit dem Grundkörper 9a verbunden ist, wobei die Federbaugruppe 10 die Klemmfeder 10a und ein mit dieser verbundenes Kunststoffteil 10b umfasst. Konkret weist das Funktionselement 9 zwei Federbaugruppen 10 auf, wobei jede Federbaugruppe 10 je eine Klemmfeder 10a und je ein Kunststoffteil 10b aufweist.

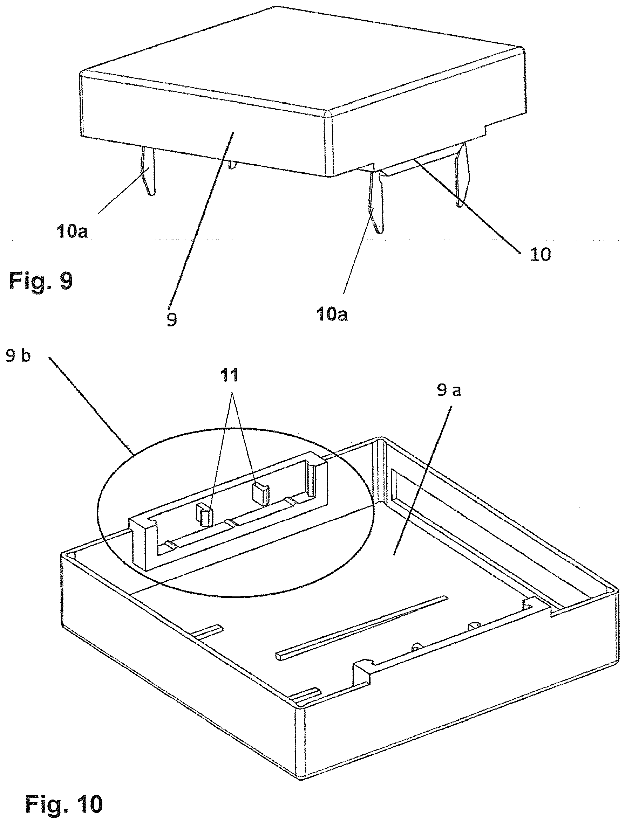

Fig. 8 zeigt eine Ansicht des Funktionselements 9 von unten und Fig. 9 zeigt eine perspektivische Ansicht des Funktionselements 9 seitlich und von oben. Das Funktionselement 9 ist als Zentralscheibe oder Blindscheibe ausgestaltet. Fig. 8 zeigt, dass die Federbaugruppe 10 in einer Tasche 9b des Grundkörpers 9a zumindest bereichsweise aufgenommen ist, so dass die Klemmfeder 10a mit min-destens einem freien Ende vom Grundkörper 9a abragt, wobei das Kunststoffteil 10b in der Tasche 9b zumindest bereichsweise aufgenommen ist.

Fig. 10 zeigt eine Detailansicht der Tasche 9b ohne Federbaugruppe 10. Die Tasche 9b ist als an zwei Seitenflächen offenes Fach ausgebildet. Innerhalb der Tasche 9b sind Rastmittel 11 angeordnet, welche zwei Rastnasen umfassen und von einer Seitenwand des Grundkörpers 9a in dessen Inneres abragen.

Fig. 8 zeigt, dass das Kunststoffteil 10b eine rechteckige Aussparung 12 aufweist, welche von den Rastmitteln 11 des Grundkörpers 9a durchgriffen ist, um die Federbaugruppe 10 formschlüssig am Grundkörper 9a festzulegen.

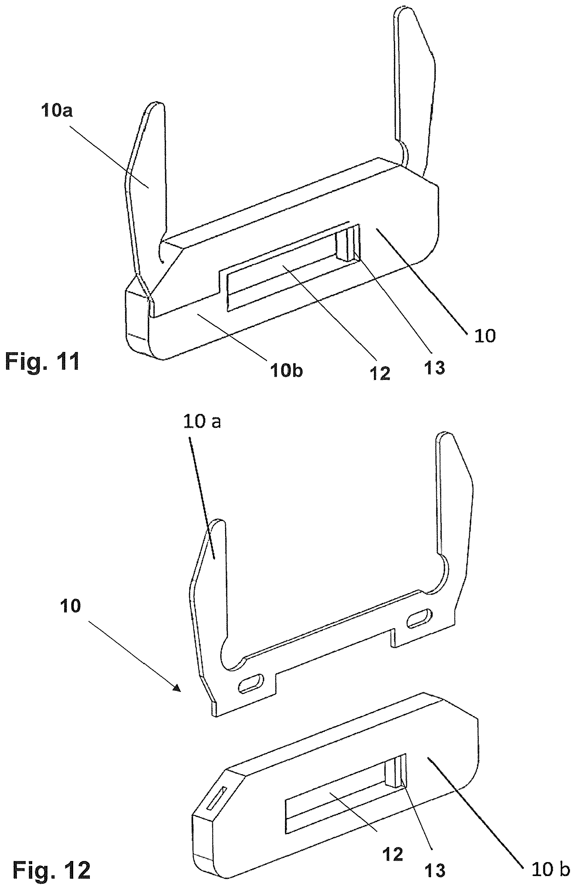

Fig. 11 und Fig. 12 zeigen, dass die Aussparung 12 an ihren Endbereichen von Rastschultern 13 gesäumt ist, die von den Rastmitteln 11 bzw. den Rastnasen übergriffen werden können. Die Klemmfeder 10a weist zwei Flügel auf, die mit ihren freien Enden vom Grundkörper 9a und vom Kunststoffteil 10b abragen. Fig. 11 und 12 zeigen eine aus Metall gefertigte Klemmfeder 10a, welche von dem Kunststoffteil 10b teilweise, insbesondere im Befestigungsbereich, umspritzt ist. Der Befestigungsbereich umfasst einen Querbalken, der die zwei Flügel der Klemmfeder 10a verbindet. Fig. 11 und 12 zeigen eine Federbaugruppe 10 zur Verwendung in einem Funktionselement 9 der Fig. 8 bis 10 und/ oder in einem Gerät der Fig. 1 und 2. Die Federbaugruppe 10 umfasst eine Klemmfeder 10a und ein mit dieser verbundenes Kunststoffteil 10b.

**Bezugszeichenliste**

| | |
|---|---|
| 1 | Wand |
| 2 | Gerätedose |
| 3 | Rahmen |
| 4 | Unterputzeinsatz |
| 4a | Mittel zur verrastenden Aufnahme in 4 |
| 5, 7 | Funktionselement, Stand der Technik |
| 6, 8 | Klemmfeder |
| 9 | Funktionselement |
| 9a | Grundkörper |
| 9b | Tasche in 9a |
| 10 | Federbaugruppe |
| 10a | Klemmfeder |
| 10b | Kunststoffteil |
| 11 | Rastmittel von 9a |
| 12 | Aussparung in 10b |
| 13 | Rastschulter von 10b |

## Patentansprüche

1. Funktionselement (9) zur verrastenden Anordnung an einem Gerät der Hausinstallationstechnik, umfassend einen Grundkörper (9a) mit mindestens einer Klemmfeder (10a), wobei die Klemmfeder (10a) mit mindestens einem freien Ende vom Grundkörper (9a) abragt, um in ein Mittel (4a) zur verrastenden Aufnahme am Gerät einzugreifen, **dadurch gekennzeichnet, dass** die Klemmfeder (10a) Teil einer Federbaugruppe (10) ist, welche als separat gefertigte Einheit mit dem Grundkörper (9a) verbunden ist, wobei die Federbaugruppe (10) die Klemmfeder (10a) und ein mit dieser verbundenes Kunststoffteil (10b) umfasst.

2. Funktionselement nach Anspruch 1, **dadurch gekennzeichnet, dass** die Federbaugruppe (10) in einer Ausnehmung, Mulde oder Tasche (9b) des Grundkörpers (9a) zumindest bereichsweise aufgenommen ist, so dass die Klemmfeder (10a) mit mindestens einem freien Ende vom Grundkörper (9a) abragt, wobei das Kunststoffteil (10b) in der Ausnehmung, Mulde oder Tasche (9b) zumindest bereichsweise aufgenommen ist.

3. Funktionselement nach einem der voranstehenden Ansprüche, **dadurch gekennzeichnet, dass** die Klemmfeder (10a) aus einem Metall gefertigt ist und von dem Kunststoffteil (10b) teilweise, vorzugsweise an einem Befestigungsbereich, umspritzt ist.

4. Funktionselement nach einem der voranstehenden Ansprüche, **dadurch gekennzeichnet, dass** das Kunststoffteil (10b) eine Aussparung (12) aufweist, welche von Rastmitteln (11) des Grundkörpers (9a) durchgriffen ist, um die Federbaugruppe (10) formschlüssig am Grundkörper (9a) festzulegen,

5. Funktionselement nach einem der voranstehenden Ansprüche, **dadurch gekennzeichnet, dass** die Federbaugruppe (10) stoffschlüssig und/ oder kraftschlüssig am Grundkörper (9a) befestigt ist.

6. Funktionselement nach einem der voranstehenden Ansprüche, **dadurch gekennzeichnet, dass** die Klemmfeder (10a) zwei Flügel aufweist, die mit ihren freien Enden vom Grundkörper (9a) und/ oder vom Kunststoffteil (10b) abragen.

7. Funktionselement nach einem der voranstehenden Ansprüche, **gekennzeichnet durch** eine Ausgestaltung als Zentralscheibe oder Blindscheibe.

8. Gerät der Hausinstallationstechnik, umfassend ein Funktionselement (9) nach einem der voranstehenden Ansprüche und Mittel (4a) zur verrastenden Aufnahme der Klemmfeder (10a), wobei die Klemmfeder (10a) in die Mittel (4a) verrastend eingreift und dadurch das Funktionselement (9) am Gerät festlegt.

9. Gerät nach Anspruch 8, **dadurch gekennzeichnet, dass** die Mittel (4a) zur verrastenden Aufnahme an einem Unterputzeinsatz (4) angeordnet sind.

10. Federbaugruppe (10) zur Verwendung in einem Funktionselement (9) nach einem der Ansprüche 1 bis 7 und/ oder in einem Gerät nach einem der Ansprüche 8 oder 9, umfassend eine Klemmfeder (10a) und ein mit dieser verbundenes Kunststoffteil (10b).
